# EUROPEAN PATENT APPLICATION

(11) **EP 2 330 442 A2**
(43) Date of publication of application: **08.06.2011**
(21) Application number: 10191402.6
(22) Date of filing: 16.11.2010
(51) Int. Cl.: G01S 19/33, G01S 19/36, G01S 19/28

(54) **Navigation receivers and navigation methods thereof**

(30) Priority: 17.11.2009 GB 0920103; 11.11.2010 KR 20100112346
(71) Applicant: SAMSUNG ELECTRONICS CO., LTD., Suwon-si Gyeonggi-do 442-742 (KR)
(72) Inventor: Lee, Jung-Hwan, 442-742 Gyeonggi-do (KR)
(74) Representative: Jenkins, Richard Gavin

(57) **Abstract**

A navigation receiver is provided having a receive chain arranged to down convert signals received in a tuneable receive frequency band using a tuneable local oscillator. The tuneable receive frequency band is determined by tuning the local oscillator. The receiver includes a sampler arranged to sample the down converted signals and to sample a plurality of signals in each first and each second time slot. The receiver includes a processor arranged to determine at least a position associated with the receiver based on at least the sampled signals in each first and each second time slots. The receiver is capable of determining a position based on signals received from navigation transmitters operating according to a first navigation system using the first frequency band and from navigation transmitters operating according to the second navigation system using the second frequency band, different from the first frequency band.

## Description

### BACKGROUND OF THE INVENTION

### 1. Field of the Invention

The present invention relates generally to navigation receivers, and more particularly to methods, an apparatus and computer software relating to navigation receivers capable of receiving signals from one or more navigation transmitters operating according to a first navigation system and from one or more navigation transmitters operating according to a second navigation system.

### 2. Description of the Related Art

A navigation receiver receives signals transmitted by navigation transmitters in a navigation system, using a navigation system technology appropriate for that navigation system. A navigation receiver may be a dedicated apparatus or may be equipment that includes functionality other than navigation, such a mobile handset for a cellular wireless system.

A Global Positioning System (GPS) and a GLObal NAvigation Satellite System (Glonass or GLONASS) are examples of satellite navigation systems, which, at many locations, enable a user to obtain reliable and accurate position information, as well as typically velocity and timing information. Other planned satellite navigation systems include a European Galileo system, an Indian Regional Navigation Satellite System (IRNSS), and Compass & Beidou satellite navigation systems.

Other, non-satellite, navigation systems also are also known. Pseudolite navigation systems, are ground-based alternatives to satellite navigation systems. Other terrestrial navigation systems, such as LOng RAnge Navigation (LORAN), are also known, along with systems in which cellular radio network access nodes are used as navigation transmitters. Others systems also use Wi-Fi network access points as navigation transmitters.

To provide a reliable three dimensional position estimate, using a navigation system, the receiver needs to solve a set of equations of four unknowns; the three dimensional position coordinates and the receiver clock error. Therefore the receiver ideally needs to acquire and track at least four navigation transmitter signals. Furthermore, since satellites are not stationary, accurate information about their position and velocity at the time of transmission is required in the case of satellite navigation systems. This information can be decoded from satellite signals themselves with a typical rate of 50bits/second, which could be a time consuming process and vulnerable to low Signal to Noise Ratio (SNR) conditions. This information can also be obtained from a terrestrial server in the form of assisted data information at the beginning of the navigation process. The information may be communicated to the receiver using a terrestrial wireless communication system, such as a cellular wireless network. In some situations, the receiver may not be able to receive four acceptable satellite signals from satellites of one system. For example, when a user is located in a typical urban area, a line of sight may be partially blocked by surrounding buildings, so that reception from some satellites, typically at low elevation angles, may be blocked. In such cases, the accuracy of a satellite navigation system may be degraded.

It may be possible to achieve a two dimensional position estimate to a useful degree of accuracy on the basis of three navigation transmitter signals, by making assumptions about the elevation of the position, for example, on the basis of past position estimates or according to elevation estimates from sources such as other positioning or navigation systems.

However, if less than a predetermined number of navigation transmitters are available for reception by a receiver, the performance of the position estimation may not be acceptable, or the location estimation may not be possible, using the navigation system. In a satellite navigation system, and other triangulation systems, the predetermined number of navigation transmitters required is typically three.

### SUMMARY OF THE INVENTION

The present invention has been made to address at least the above problems and/or disadvantages and to provide at least the advantages described below. Accordingly, an aspect of the present invention provides methods, an apparatus and computer software relating to navigation receivers capable of receiving signals from one or more navigation transmitters operating according to a first navigation system and from one or more navigation transmitters operating according to a second navigation system.

According to one aspect of the present invention, a navigation receiver is provided. The navigation receiver includes a receive chain arranged to down convert signals received in a tuneable receive frequency band using a tuneable local oscillator. The tuneable receive frequency band is determined by tuning the local oscillator. The receiver also includes a sampler arranged to sample the down converted signals and to sample a plurality of signals in each first and second time slot of time slot sequences, and a processor. The tuneable local oscillator is arranged to be tuned to a sequence of frequencies such that the tuneable receive frequency band corresponds to a first frequency band in first time slots and the tuneable receive frequency band corresponds to at least part of a second frequency band in second time slots. The navigation receiver is capable of determining a position based on signals received from one or more navigation transmitters operating according to the first navigation system using a first frequency band and from one or more navigation transmitters operating according to the second navigation system using the second frequency band, different from the first frequency band.

According to another aspect of the present invention, a satellite navigation method is provided. Signals are received from satellites operating according to a first satellite navigation system. Based on information received by the receiver relating to the first satellite navigation system, a set of satellites of the first satellite navigation system is determined from which acceptable signals are not received and from which signals would be expected to be received in an unobstructed environment. A zone of directions of arrival from which satellite reception is not expected is estimated based on the directions of arrival associated with the set of satellites. A second set of satellites operating according to a frequency division multiplexed satellite navigation system from which signals are expected is determined based on the estimated zone of directions of arrival from which satellite reception is not expected and based on information received by the receiver relating to the frequency division multiplexed satellite navigation system. A sub-band is selected for the reception of signals. The selected sub-band is of the second frequency band for reception of signals from a satellite in the second determined set of satellites from which signals are expected.

An estimate of a first range between a first satellite and the receiver may be determined. It may be operated according to the first satellite navigation system using the first satellite navigation system. The first range corresponds to a first time.

An estimate of a second range between a second satellite and the receiver may be determined. It may be operated according to the second satellite navigation system using the second satellite navigation system. The second range corresponds to a second time, different from the first time.

An estimate of a third range between the second satellite and the receiver may be determined based on a determined motion of the second satellite and the estimate of the second range. The third range corresponds to the first time.

A position of the receiver may be calculated based on at least the first range, the third range, a position of the first satellite, a position of the second satellite, and signals received from one or more satellites operating according to the first satellite navigation system and one or more satellites operating according to the second satellite navigation system.

An estimate of a fourth range between a third satellite and the receiver may determined. It may be operated according to the second satellite navigation system using the second satellite navigation system. The fourth range corresponds to a third time, different from the first time and the second time;

An estimate of a fifth range between the third satellite and the receiver may be determined based on a determined motion of the second satellite and the fourth range. The fifth range corresponds to the first time.

The position of the receiver may be calculated on the basis of at least the first, third and fifth range, with the advantage that calculations can be made on the basis of signals received from satellites the signals from which fall into different sub-bands, the reception of which is time multiplexed.

A number of navigation transmitters operating according to the first navigation system from which acceptable signals are received may be determined.

A single system mode of operation may be selected on the basis of the number. In the single system mode of operation the position of the receiver is calculated on the basis of signals received by the receiver from one or more navigation transmitters operating according to the first navigation system.

A multi-system mode of operation may be selected on the basis of the number. In the multi-system mode of operation the position of the receiver is calculated both on the basis of signals received by the receiver from one or more navigation transmitters operating according to the first navigation system and on the basis of signals received from one or more navigation transmitters operating according to the second navigation system.

### BRIEF DESCRIPTION OF THE DRAWINGS

The above and other aspects, features and advantages of the present invention will be more apparent from the following detailed description when taken in conjunction with the accompanying drawings, in which:
FIG. 1 is a schematic diagram illustrating frequency bands used by GPS and Glonass satellite navigation systems;
FIG. 2 is a schematic diagram illustrating a receiver in a location in which signals from satellites at low elevations is obstructed;
FIG. 3 is a schematic diagram illustrating a distribution of satellites in a hemisphere in which signals from some are obstructed;
FIG. 4 is a schematic diagram illustrating a receiver, according to an embodiment of the invention;
FIG. 5 is a schematic diagram illustrating a time slot sequence, according to an embodiment of the invention;
FIG. 6 is a flow diagram illustrating a method of selecting a sub-band for the reception of signals, according to an embodiment of the invention; and
FIG. 7 is a schematic diagram illustrating estimated zones of directions of arrival from which satellite reception is not expected, according to an embodiment of the invention;
FIG. 8 is a schematic diagram illustrating time references for range calculations corresponding using GPS and Glonass satellite navigation systems, according to an embodiment of the invention; and
FIG. 9 is a flow diagram illustrating a method of selecting a mode of operation of a satellite navigation receiver, according to an embodiment of the invention.
FIG. 10 is a schematic diagram illustrating the position of a local oscillator in relation to GPS and Glonass bands, according to an embodiment of the invention; and
FIG. 11 is a schematic diagram illustrating carriers in an intermediate frequency band, according to an embodiment of the invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

An embodiment of the invention is described in the context of a satellite navigation receiver capable of determining a position on the basis of signals received from one or more satellites operating according to a GPS satellite navigation system and from one or more satellites operating according to a Glonass navigation system. However, it is understood that this is by way of example only and that other embodiments may involve the use of navigation transmitters operating according to other navigation systems.

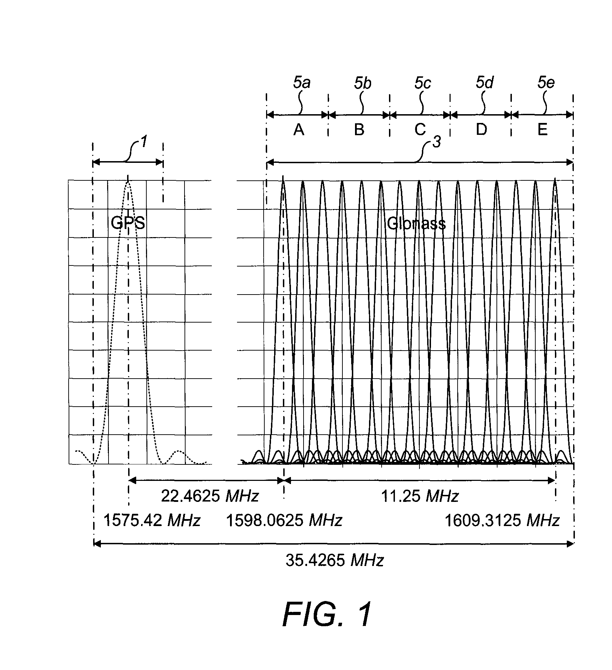

FIG. 1 illustrates frequency bands used by GPS and Glonass satellite navigation systems. The frequency band used by GPS 1 is different from the frequency band used by Glonass 3.

The GPS satellite navigation system uses Code Division Multiple Access (CDMA) to multiplex signals transmitted from different satellites, whereas Glonass uses Frequency Division Multiple Access (FDMA) to multiplex signals transmitted from different satellites. Thus, in the Glonass system, it is possible to make use of a sub-band of the frequency band 3 used by the system in order to receive signals from a sub-set of satellites. In FIG. 1, five sub-bands are shown, designated A 5a, B 5b, C 5c, D 5d and E 5e. Each sub-band encompasses the frequencies used by three respective satellites.

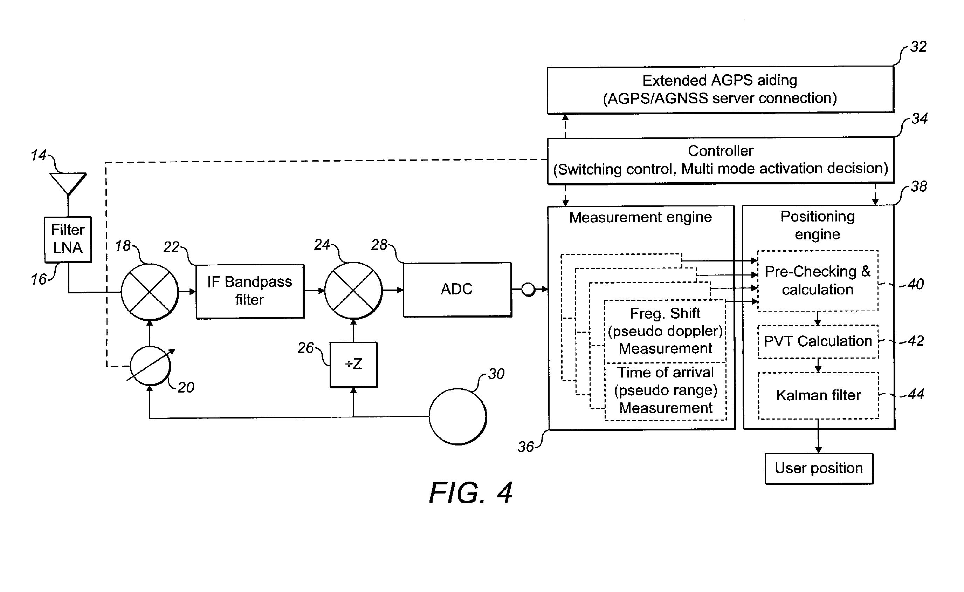

Alternatively, a system in which each sub-band encompasses the frequencies used by four satellites may be advantageously employed. Parts of the sub-bands may overlap. For example, four sub-bands may be employed, centred on 1598.90625 MHz (covering Glonass frequencies designated as -7, -6, -5 and -4), 1601.15625 MHz (covering Glonass frequencies designated -3, -2, -1, and 0), 1603.6875 MHz (covering Glonass frequencies designated 1, 2, 3, and 4) and 1604.53125 MHz (covering Glonass frequencies designated 3, 4, 5, and 6). The last two bands listed may overlap, which may be advantageous in arranging the downconversion frequency plan to avoid problems with image frequencies, particularly in the case where a direct conversion architecture is employed (in which the second local oscillator 26 and mixer 24 of the arrangement shown in FIG. 4 are omitted).

As shown in FIG. 1, the Glonass system uses a wider frequency band 3 than the frequency band 1 used by the GPS system. Typically, the GPS system uses a bandwidth of approximately 2-2.5 MHz, whereas the Glonass system uses a bandwidth of approximately 12 MHz. It should be noted that the GPS system transmits signals in bands other than that shown in FIG. 1, for example for use by high precision and military receivers. However, typically, a receiver intended for civilian consumer equipment is designed to receive the frequency band 1 shown in FIG. 1.

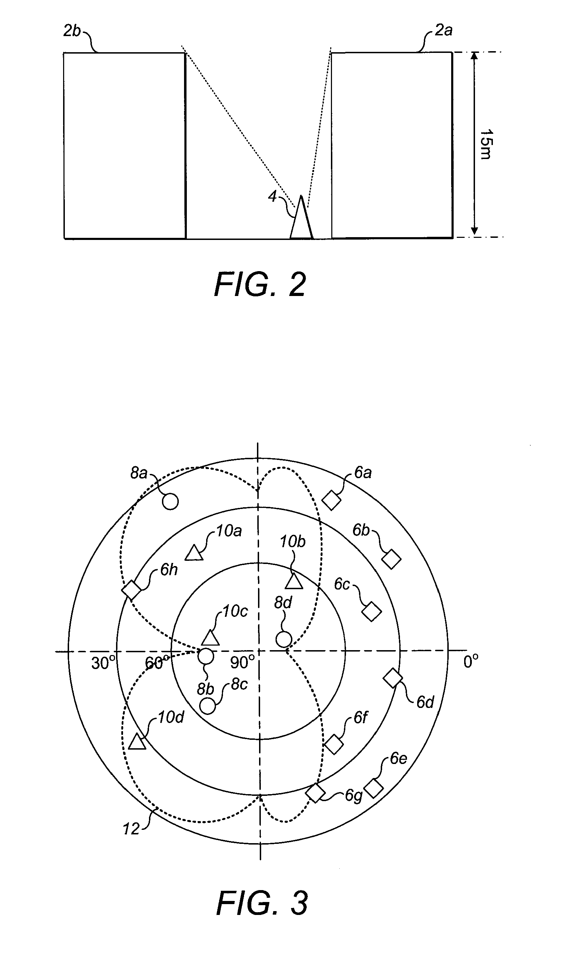

FIG. 2 illustrates a scenario in which signals from one or more satellites may be blocked. A receiver 4 is shown in a typical urban street canyon, i.e., a street with buildings 2a, 2b on either side that may obstruct satellites. In the case of FIG. 2, the building height is shown as approximately 15m. Satellites at low elevation angles would be obstructed, since a line of sight view is typically required for good signal reception at frequencies in the 1- 2 GHz range used by satellite navigation systems. It should also be noted that satellite systems are typically arranged so that the system operates close to the noise floor, in order to limit transmission power at a satellite and so that a relatively small amount of attenuation may render a signal from a satellite unacceptable. There are also situations in which the height of buildings is considerably greater than 15m, in which case the blockage may affect signals received from satellites at greater elevation angles than those shown in the example of FIG. 2.

FIG. 3 is a hemispherical view illustrating an example of positions of satellites using GPS and Glonass satellite navigation systems. The position around the circumference of the circles of figure 3 represents an azimuth angle and the position along a radius represents elevation, and the centre represents a point directly overhead. This type of diagram may be referred to as a top of head view. The arrangement of satellites may be referred to as a constellation.

FIG. 3 shows, as an illustrative example, squares 6a, 6b, 6c, 6d, 6e, 6f, 6g, 6h, as the position of satellites, using either GPS or Glonass, from which acceptable signals are not received due to blocking in a scenario similar to that illustrated in FIG. 2. Positions of satellites using GPS from which acceptable signals are received are shown as circles 8a, 8b, 8c, 8d, and positions of satellites using Glonass from which acceptable signals are received are shown as triangles 10a, 10b, 10c, 10d. There is a zone of directions of arrival from which satellite reception is expected, represented by the area within broken line 12. Outside this zone, satellite reception is not expected, as it may be blocked.

In the particular arrangement shown in FIG. 3, there are four GPS satellites and four Glonass satellites from which acceptable signals may be received. As has been described, it should therefore be possible to determine a position with good accuracy using either satellite navigation system on its own.

However, the satellites are not in geostationary orbits, and so their positions change with time, and so a situation may arise in which acceptable signals may be received from fewer satellites. Also, in street canyons with higher buildings than those shown in FIG. 2, acceptable signals may be received from fewer satellites (i.e., fewer satellites may be "visible"). As has been described, if less than three satellites are available for reception by a receiver, the performance of the position estimation may not be acceptable, or the location estimation may not be possible, using a single satellite navigation system.

For use in particular in locations where insufficient satellites from a single system are visible, a receiver is provided, according to an embodiment of the present invention, that is capable of determining a position on the basis of signals received from one or more satellites operating according to a GPS satellite navigation system and from one or more satellites operating according to a Glonass navigation system. Such a receiver is illustrated in FIG. 4.

Signals are received from satellites at an antenna 14, and are then passed to a receive chain 16, 18, 22, 24, 28. The receive chain is arranged to down convert signals received in a tuneable receive frequency band using a tuneable local oscillator 20. The tuneable receive frequency band is determined by the tuning of the local oscillator 20. The receive chain typically comprises a front end filter, typically a Surface Acoustic Wave (SAW) filter, and a Low Noise Amplifier (LNA) 16, followed by a mixer 18 to mix the received, filtered and amplified signals with signals from the local oscillator 20, so that a tuneable receive band is defined by an Intermediate Frequency (IF) band pass filter 22. A second local oscillator signal is then provided by a frequency divider 26 to a second mixer 24. Signals from the IF band pass filter 22 are mixed to a second IF by the second mixer 24, and the signals are sampled by a sampler, such as an Analogue to Digital Converter (ADC) 28. The local oscillator 20 and the divider 26 may derive their frequency references from a common frequency source 30.

The tuneable local oscillator is arranged to be tuned to a sequence of frequencies such that the tuneable receive frequency band corresponds to the GPS frequency band 1 in first time slots and the tuneable receive frequency band corresponds to at least part 5a, 5b, 5c, 5d, 5e of the Glonass frequency band 3 in second time slots. The first and second time slots form different elements of a time slot sequence. The designations "first" and "second" are arbitrary, and it is not meant to be implied that time slots for receiving GPS signals precede those for receiving Glonass signals at start up.

The sampler samples a plurality of samples of the signal in each first and each second time slot. The processor is arranged to determine at least a position associated with the receiver on the basis of at least the sampled signals in the first and second time slots. The processor is thus provided with signals from satellites operating according to GPS and satellites operating according to Glonass in a time shared manner.

Digitised signals from the ADC 28 are passed to a processor, comprising a measurement engine 36, typically timeshared between operation on signals from each satellite, a positioning engine 38, a controller 34, and an extended Assisted GPS (AGPS) aiding functional block 32.

The measurement engine 36 performs frequency shift measurements for signals from each received satellite operating according to the GPS or Glonass system as applicable. The frequency shift measurements are a calculation of so called pseudo Doppler shift, and also time of arrival is calculated, and from this an estimate of range between the satellite and the receiver calculated, known as a pseudo range. The calculated quantities are known as "pseudo" range and Doppler, since they are derived using a clock that may have inaccuracies. The effect of the inaccuracies may be removed by subsequent calculation.

Pseudo range and pseudo Doppler measurements for each satellite, including satellites operating according to each of the GPS and Glonass systems, are then passed to the positioning engine 38 to determine a position, i.e., a position of the receiver and therefore a user position.

Pre-checking and calculation 40 is performed followed by a calculation of position, and typically also a calculation of velocity and time (a PVT calculation) 42. The calculated position, velocity and time values are passed to a Kalman filter 44, which determines an estimate of the position, velocity and time based on a history of estimated data. A determined position is then output from the positioning engine 38.

A position associated with the receiver is therefore determined on the basis of at least the sampled signals in the first and second time slots. Specifically, the determination of position is determined at least on the basis of signals received from satellites operating according to both the GPS and Glonass satellite navigation systems.

In this embodiment of the present invention, the sampler uses the same sampling clock to sample the signal in each first and each second time slot that is used to sample the signals from satellites operating according to the GPS and Glonass satellite systems. It is beneficial that any sampling clock error is the same for both systems, in order for a position calculation based on signal from satellites operating according to both systems to be accurate.

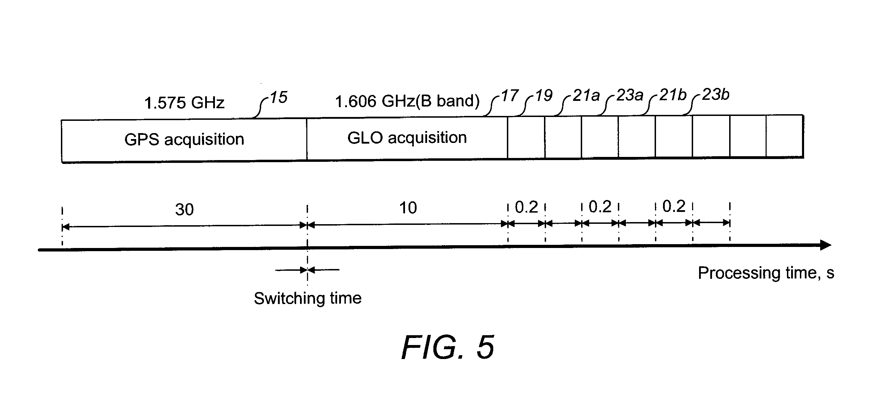

FIG. 5 illustrates a typical time slot sequence, according to an embodiment of the invention. In particular FIG. 5 illustrates a sequence of first time slots 15, 21a, 21b used for reception of signals from satellites operating according to the GPS system, and second time slots 17, 19, 23a, 23b for reception of signals from satellites operating according to the Glonass system.

Initially, when a position is required to be determined, an acquisition process is carried out during timeslots 15, 17 that may be longer than timeslots used for subsequent tracking once signals have been acquired. An acquisition process is a well known process in satellite navigation systems that is required in order for range estimates to be carried out. Satellites have to be identified from which acceptable signals can be received. The location of the satellites needs to be established (typically using information such as almanac and ephemeris information that may be received using a terrestrial communication system, typically with a wireless link such as a cellular wireless network connection), and timing parameters need to be established.

FIG. 5 shows a shorter period allocated for Glonass acquisition 17 than for GPS acquisition 15. This may be the case if fewer Glonass satellites than GPS satellites need to be acquired.

Following acquisition, the processor carries out a tracking process, in which position estimates are updated using signals received from acquired satellites. Timeslots for tracking 19, 21a, 23a, 21b, 23b are typically shorter than those used for acquisition 15, 17. In the embodiment illustrated in FIG. 5, GPS acquisition is allocated 30 seconds, Glonass acquisition is allocated 10 seconds, and each tracking period is set at 200ms. The time allocated to the acquisition phase may be variable, according to the time needed for the acquisition process. This will depend on factors including how recently a position determination, also called a position fix, was last performed, which will in turn affect the relevance of stored system parameters. Generally, acquisition times, when using aiding by information received using a terrestrial communication system, are in the region of 5s - 60s and a tracking time in the region 0.1- 0.5 s has been found to offer good performance. In particular, a first and second timeslot period of 0.2s, when the processor is in the tracking phase, has been found to provide good performance, so that re-acquisition at the beginning of the timeslot is quick and a typical drift in sampling clock frequency between one timeslot and the next is acceptable.

There may typically be a period at the beginning of a timeslot when samples of received signals are discarded, due to the need to leave time for the local oscillator frequency to settle after tuning.

It may also be advantageous to disable processing for parts of timeslots in order to reduce power consumption.

The time slots in which signals are received from the Glonass system may comprise a first portion in which the tuneable receive frequency band corresponds to a first part, that may be referred to as a sub-band, 5a of the Glonass frequency band 3 and a second portion in which the tuneable receive frequency band corresponds to a second part or sub-band 5b of the Glonass frequency band 3. In this way, reception of signals in one sub-band may be time multiplexed with signals in another sub-band, allowing signals to be processed received from Glonass satellites whose signals fall into different sub-bands.

Since, in this embodiment of the present invention, the Glonass frequency band 3 is divided into sub-bands, not all of which may be required to be received, a method of selecting a sub-band for the reception of signals is provided.

Signals are received from satellites operating according to the GPS satellite navigation system (GPS satellites). On the basis of information received by the receiver relating to the GPS navigation system, a set of GPS satellites is determined from which acceptable signals are not received, but from which signals would be expected to be received in an unobstructed environment. These are considered "invisible" satellites.

Based the directions of arrival associated with the set of invisible satellites, a zone of directions of arrival from which satellite reception is not expected is estimated, that may be referred to as a blind zone. This may encompass angles within a certain angular range of the directions of arrival of invisible satellites. It is assumed that Glonass satellites with directions of arrival in the blind zone will also be invisible. A set of Glonass satellites from which signals are expected is then determined, on the basis of information received by the receiver relating to the Glonass satellite navigation system, in particular information, such as almanac and ephemeris information, in comparison with information relating to the blind zone. The information may be received by the receiver via a connection to a terrestrial wireless network

A sub-band is selected for the reception of signals from a satellite in the determined set of Glonass satellites from which signals are expected.

Signals from several Glonass satellites may fall into the same selected sub-band. More than one sub-band may be selected in order to receive a desired number of Glonass satellites. Each sub-band will then be received in a time shared manner as described above.

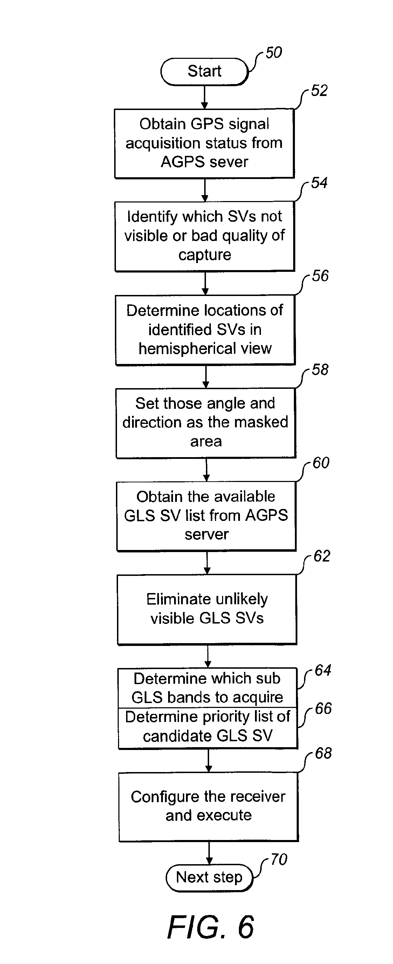

FIG. 6 is a flow diagram illustrating a method of selecting a sub-band for the reception of signals, according to an embodiment of the present invention.

The methodology begins at step 50. In step 52, GPS signal acquisition status is obtained from an AGPS server. In step 54, a set of satellites of the GPS system are determined from which acceptable signals are not received but from which signals would be expected to be received, on the basis of information relating to the GPS system received by the receiver from the assisted GPS server. The information would typically include almanac information. The acceptability of satellite signals may be judged, for example, on the basis of quality of capture, (i.e., degree of success of the acquisition process).

In step 56, locations of determined satellites are determined in a hemispherical view. In step 58, a zone of directions of arrival from which satellite reception is not expected is estimated on the basis of directions of arrival in elevation and azimuth associated with the set determined in steps 52 and 54.

In steps 60, a set of Glonass (GLS) satellites, also known as Space Vehicles (SV), from which signals are expected, are determined on the basis of the estimated zone of directions of arrival from which satellite reception is not expected and on the basis of information received by the receiver from the AGPS server relating to Glonass. In step 62, unlikely visible GLS SVs are eliminated.

In steps 64, 66 and 68 a sub-band for the reception of signals is selected, the selected sub-band being a sub-band of the frequency band used by Glonass, and the receiver is configured according to the selected sub-band. The sub-band may be selected on the basis of a priority list of candidate Glonass satellites. The priority in the priority list may be determined by a number of factors such as the elevation of the satellites. The methodology proceeds to the next step in step 70.

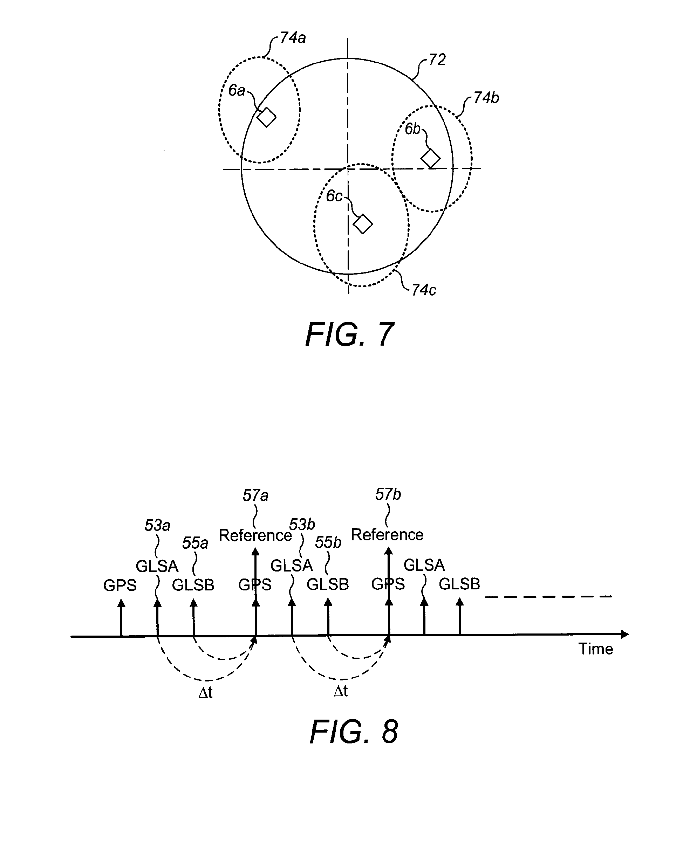

FIG. 7 illustrates an example of estimated zones of directions of arrival from which satellite reception is not expected (blind zones), according to an embodiment of the present invention. It has been determined that acceptable signals cannot be received from GPS satellites at positions 6a, 6b and 6c (it is not assumed that the positions shown in FIG. 7 correspond with those in FIG. 3). A blind zone 74a is estimated for angles of arrival in the vicinity of 6a, and similarly a blind zone 74b is estimated for angles of arrival in the vicinity of 6b and a blind zone 74c is estimated for angles of arrival in the vicinity of 6c.

Since the position, velocity and time calculation 42 carried out by the positioning engine 38 of FIG. 4 is based on pseudo range information corresponding to different times, a method of signal processing is provided for calculating a position of a satellite navigation receiver on the basis of signals received from one or more satellites operating according to a first satellite navigation system (e.g., GPS) and from one or more satellites operating according to a second satellite navigation system (e.g., Glonass). The two systems may be transposed as it does not matter which is the first or the second system.

An estimate is determined of a first range between a first satellite, operating according to the first satellite navigation system, and the receiver, using the first satellite navigation system. The first range corresponds to a first time.

An estimate is then determined of a second range between a second satellite, operating according to the second satellite navigation system, and the receiver, using the second satellite navigation system. The second range corresponds to a second time. The second time is different from the first time, since the GPS and Glonass systems are time multiplexed, and operate at different times.

An estimate is then determined of a third range between the second satellite and the receiver on the basis of a determined motion of the second satellite and the estimate of the second range. The third range corresponds to the first time. The range estimate corresponding to the second time slot is adjusted for the motion of the satellite between the first time and the second time, to give a third range.

The position of the receiver may then be calculated on the basis of at least the first and third ranges. Pseudo range information determined by the measurement engine 36 from signals received from GPS satellites can be used together with corrected pseudo range information determined by the measurement engine 36 from signals received from Glonass satellites in the positioning engine 38 to determine a position.

Estimates of the position and motion of the second satellite, derived from the Glonass system, are mapped to a GPS time reference and to a GPS position reference. The mapping between the Glonass position reference and the GPS position reference is known a priori. The mapping between the Glonass time reference and the GPS time reference is achieved by taking into account the time difference between the GPS and Glonass time reference systems that is known a priori, and also taking into account a fine correction based on a time difference measured at the receiver between a time corresponding to the start of a GPS sub frame and a time corresponding to the start of a Glonass string.

The calculation of a position of the receiver is determined based on at least the first and third ranges and the positions of the first and second satellites referred to the GPS time and frequency reference system (and preferably on other basis of other ranges and satellite positions in addition).

In order to adjust for the motion of the second satellite between the first time and the second time, estimates of the position and motion of the second satellite derived from the Glonass system are mapped to a GPS time reference and to a GPS position reference.

The motion of the satellite may be determined on the basis of a Doppler frequency calculation applied to a signal received from the second satellite, i.e., a pseudo Doppler measurement relating to the Glonass satellites and/or on the basis of ephemeris information.

The method can be extended to be applicable to the case where the timeslots allocated to reception of the Glonass system are sub-divided into portions for receiving frequency sub-bands, by correcting the pseudo ranges as above, but separately for the frequency sub-bands.

FIG. 8 shows time references for range calculations corresponding using GPS and Glonass satellite navigation systems, in the case where the timeslots allocated to reception of the Glonass system are sub-divided into portions for receiving frequency sub-bands, according to an embodiment of the present invention. Range calculations using GPS satellites correspond to a time 57a. Range calculations using Glonass satellites correspond to a time 53a for a first frequency sub-band and to a time 55a for a second frequency sub-band. The range calculations corresponding to times 53a and 55a are mapped to be appropriate to time 57a before being used to calculate the position. Similarly, in the following time slots, range calculations corresponding to times 53b and 55b are mapped to be appropriate to time 57b.

In the embodiment of the present invention described thus far, it is assumed that the receiver is operating in multi-mode mode of operation, specifically dual mode (GPS/Glonass). However, if sufficient satellites are visible to operate in a single mode, it is not necessary to operate in the multi-mode mode. There may be an advantage to operating in a single mode, in terms of reduced power consumption or the allocation of more processor resources to the single mode operation. Accordingly, a method is provided for selecting the mode of operation of the receiver. The technique is described in terms of the single mode of operation being to use the GPS system, but it should be understood that the two systems may be transposed, so that the single mode of operation may be to use the Glonass system.

The number of satellites is determined that are operating according to the first satellite navigation system (e.g., GPS) from which acceptable signals are received.

Depending on the number of satellites, a single system mode of operation or a multi-system mode of operation may be selected. In the single system mode, the position of the receiver is calculated on the basis of signals received by the receiver from one or more satellites operating according to the first satellite navigation system (e.g., GPS). In the multi-system mode of operation, the position of the receiver is calculated both on the basis of signals received by the receiver from one or more satellites operating according to the first satellite navigation system (e.g., GPS), and on also on the basis of signals received from one or more satellites operating according to the second satellite navigation system (e.g., Glonass).

Typically, the multi-system mode would be selected if the number is less than 3 and more than zero. Specifically, it may be acceptable to operate in a single mode (e.g., GPS mode) when only 3 satellites are providing acceptable signals, if for example only a two dimensional position estimate, or fix, is required.

Alternatively, the multi-system mode may be selected if the number is at least 4. Specifically, it may be acceptable to operate in a single mode (e.g., GPS mode) only when at least 4 satellites are providing acceptable signals, if for example a three dimensional position fix is required.

A terrestrial mode of operation may be selected when the number is zero, in which the position of the receiver is calculated on the basis of a terrestrial navigation system. A suitable terrestrial navigation system may be based on positioning in a cellular radio system, such as using a cell ID. If no satellites are visible operating according to one satellite system then it is likely that reception is highly obstructed, so that no or at least few satellites operating according to another satellite system will be visible.

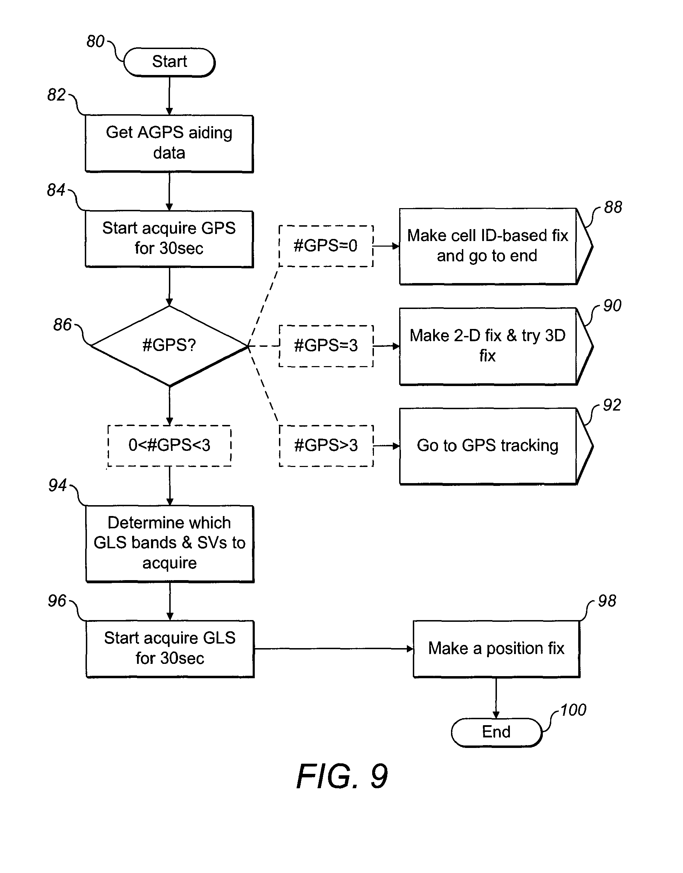

FIG. 9 is a flow diagram showing a method of selecting a mode of operation of a satellite navigation receiver. The methodology begins at step 80. At steps 82, AGPS aiding data is retrieved. In step 84, GPS signals are acquired, typically using AGPS.

At step 86, the number of GPS satellites from which acceptable signals are received is determined.

If the determined number is zero, a cell identifier from a cellular radio system is used to determine a position, i.e., to make a fix, at step 88.

If the determined number is three, a two dimensional fix is made and a three dimensional fix is attempted at step 90.

If the determined number greater than three, three dimensional GPS tracking is enabled at step 92

If the determined number greater than zero and less than three, it is determined which GLS bands and satellites (SVs) to acquire, at step 94.

At step 96, the determined Glonass satellites are acquired.

At step 98, a position is determined.

The operation of the controller 34, the measurement engine 36, and the positioning engine 38 as illustrated in FIG. 4, and is described in greater detail below. Typically, the controller 34, the measurement engine 36, and the positioning engine 38 are implemented in software.

The controller 34 controls GPS signal processing channels, selects the satellite to be searched, calculates frequency and code phase search windows and decides on the appropriate start mode (AGPS, cold, warm or hot start). AGPS mode is used if a last fix is sufficiently out of date as to require that information regarding the positions of satellites is required. Cold, warm and hot start refer to re-acquisition modes, to be selected according to the time elapsed since the last update of tracking parameters. The satellite is selected based on its priority calculation which is made relying on previous search results and the amount of a priori data such as almanac, ephemeris and previous position and fix time. The control software can be involved in predicting almanac data if the latter is not available. It controls measurement engine 36 and positioning engine 38 process sequences, and communicates between the two engines and external Location Manager.

The measurement engine 36 reads digitized RF samples from the ADC 28, and acquires visible satellites, and then starts tracking the active channels simultaneously. This unit performs digital processing of GPS signals and estimates navigation parameters required to solve the navigation task. The main procedures of this unit are:
- Acquisition & Re-acquisition: search for the signal both in frequency and C/A code phase then identify the existence of the signal and confirm detection.
- Signal Tracking: after a successful acquisition of a GPS satellite signal, approximate estimations of both code alignment and Doppler shift are obtained. In order to attain accurate measurements and ensure continuous adjustments of these two entities a tracking process of both code phase, using first order Delay Locked Loop (DLL), and Doppler frequency, using combination of Frequency Locked Loop (FLL) and Phase Locked Loop (PLL) has to be carried out immediately after detection.
- Bit Synchronization: uses 20 coherent correlators with 20 ms accumulation time. Deferent time positions of bit boundary are used in CA code generation process. Estimation of bit boundary corresponds to the correlator with a maximum output value.
- Frame Synchronization: preamble is searched to determine the start of each sub-frame. To avoid false preambles we need to check parity bits of the navigation words. The frame synchronization is achieved when the best hypothesis, which has the maximum number of successfully parity checks, has at least 10 successfully checked.

The outputs of measurement engine 36 are the raw data of frames, pseudo-range and pseudo-Doppler measurement for each active channel, and channel status such as SNR.

The positioning engine 38 uses pseudo-range and pseudo-Doppler measurements, as well as satellite ephemeris to calculate receiver PVT. The positioning engine 38 determines satellite positions relative to the receiver (azimuth and elevation angles), and Dilution of Precision (DOP). The latter gives an estimate of the positional accuracy based on the angular separation between the satellites used to calculate the receiver's position. The positioning engine includes the following functions:
- NAV Message Decoder: decodes the data from the 50 bps L1 NAV message. The message consists of a 1500 bit long frame made up of five sub-frames, each sub-frame being 300 bits long. The decoder includes parity based error checking, so that only valid data is returned to the positioning engine.
- Satellite Position & Velocity Calculation: calculates the position of each satellite in ECEF (x, y, z) coordinates based on the ephemeris and clock correction parameters given in sub-frames 1, 2, and 3, and the time of signal transmission as determined from the pseudo-range measurements.
- Corrected Pseudo-range Calculation: clock correction parameters are broadcast in sub-frame 1. In order to reduce the positioning errors, the measured pseudo-ranges must be corrected to account for small time differences between the clocks onboard each satellite, and relativistic effects.
- Calculate Receiver Position 3D: the receiver knows the exact satellite ECEF positions at a given time of transmission. It knows the pseudo-range, or the difference in time of reception, for each satellite. In order to calculate the receiver ECEF position it is necessary to calculate the exact range, or transmission delay, between each satellite and the receiver. There are 4 unknowns, therefore a minimum of 4 satellites are required to do the calculation. When there are more than 4 satellites, the problem may be generalized as an over-determined linear algebraic equation, which has no exact solution. The least squared solution is calculated iteratively using a pseudo-inverse.
- Calculate Receiver Position 2D: To calculate a 2D position, a previous good 3D position fix is required. By assuming that the altitude is fixed to the last known value, it is possible to calculate a 2D position using only 3 satellites.
- DOP Calculation: DOP is used to describe the effect of the geometric strength of the satellite constellation on the accuracy of the position calculation. Good (low) DOP occurs when there is wide angular separation between the satellites used in the position solution. The DOP is derived from the diagonal elements of the covariance matrix of the least squares solution. Horizontal DOP (HDOP) is part of the NMEA GPGSA sentence.
- Kalman Filter: adjust the final PVT output between prediction and measurement. Its decision is based on both adopted dynamic model and calculated standard deviation of measurements.

In the sub-banding arrangement illustrated by FIG. 1, sub-bands represented by reference numerals 1, 5a, 5b, 5c, 5d and 5e, respectively, may be selected in turn for conversion to an IF band, according to a time slot sequence. The GPS signal, or GPS carrier, may be received in one time slot, and one or more Glonass signals, or Glonass carriers, may be received in another timeslot. The further Glonass signals may be received in further timeslots.

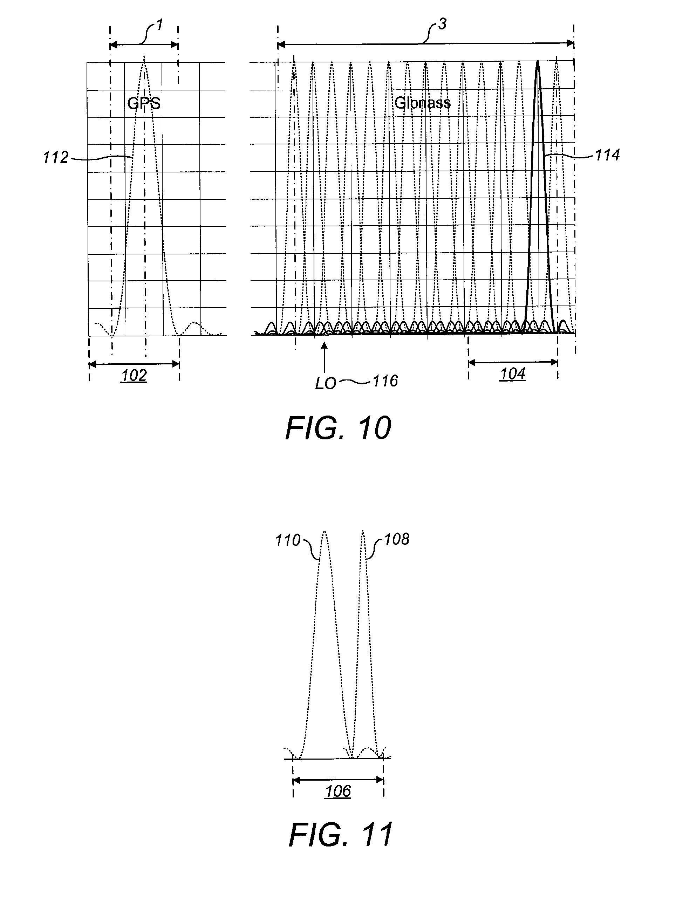

In another embodiment of the present invention, as illustrated in FIGS. 10 and 11, two sub-bands 102, 104 may be converted to an intermediate frequency band 106 simultaneously. Typically, a Local Oscillator (LO) 116 is placed between the selected sub-bands 102, 104, mid-way between the sub-bands, so that both sub-bands may be converted to an IF band 106. The signals converted to the IF band 106 have a frequency that is the difference between the received signal frequency and the local oscillator frequency. In the case of the lower band 102, the signals that are converted to the IF band 106 appear as image frequencies. Specifically, the frequency components at the IF band 106 are mirrored in frequency in relation to the received signals.

In the examples shown in FIGS. 10 and 11, a GPS signal 112 and a Glonass signal 114 are both converted to the IF band 106, for example, by a receiver similar to that shown in FIG. 4. The LO 116 is applied to the mixer 18. It is assumed in this embodiment of the present invention that only one Glonass signal 114 is present in the sub-band 104. The GPS signal appears at the intermediate frequency as a signal 110 that is inverted, or mirrored, in frequency, and the Glonass signal appears as a signal 108 without frequency inversion. The position of the LO 116 and the IF bandwidth are arranged so that the GPS and Glonass signals are arranged to be typically adjacent. A degree of overlap of the signals may be tolerated. The respective IF signals may be converted to baseband for processing by a processor or a parallel arrangement of processors to determine the user's position. The processor is arranged to take account of the frequency inversion of any of the signals. In this way, timesharing of the receiver architecture is reduced and the determination of the user's position may be accelerated.

Other sub-banding arrangements may be used. For example, two sub-bands may be arranged within the Glonass band the local oscillator may be placed between the sub-bands. In this embodiment, one or more Glonass signals may be converted from each sub-band to the intermediate frequency band. The local oscillator frequency is chosen such that, preferably, the Glonass signals appear adjacent to one another at intermediate frequency, although a degree of overlap may be tolerated. For a quick scan, it may be acceptable to interleave Glonass frequencies from two sub-bands, so that the peaks of the signals of one band appear typically mid-way between the peaks of the signals at the other bands. This may be effective in particular if quick reception of strong signals is required, as time sharing of the receiver is reduced.

Information about which signals are visible may be used to adjust the arrangement of sub-bands, and in particular to tune the local oscillator, so that visible signals from two sub-bands may be converted to a single intermediate frequency band, preferably arranged to be adjacent to one another the intermediate frequency.

In other embodiments, wider sub-bands and a wider IF frequency band may be used so that a larger part or all of the Glonass and GPS bands may be converted to single IF band. An embodiment of the present invention may combine mixing of two sub-bands to a single IF band with tuning of the local oscillator according to a time slot sequence.

In other embodiments of the present invention, other navigation systems may be used in place of the Glonass and GPS systems, for example, hybrid positioning using WiFi, DAB and/or TV signals may be performed. The intermediate frequency bandwidth and local oscillator frequency may be adjusted adaptively according to the observable satellite or other signals and according to the navigation system parameters in use and hardware restrictions, and the adjustment may be according to a time slot sequence.

The above embodiments are to be understood as illustrative examples of the invention. It should be noted that, whilst the above specific embodiments have been described in relation to satellite navigation systems, other, non-satellite navigation systems, such as pseudolite navigation systems, LORAN navigation systems, cellular radio network navigation systems and Wi-Fi network navigation systems, may be incorporated as one or more of the systems used by a multi-system navigation receiver in accordance with the invention.

It should also be noted that a combined GPS/Galileo system may constitute the first or second navigation system or satellite navigation system. Furthermore, third or further navigation systems or satellite navigation systems may be employed in a similar way to the second navigation and satellite navigation systems. For example, when a GPS or combined GPS/Galileo system can receive less than 3, or alternatively 4, satellites (or other transmitters) with acceptable quality, the system may try to acquire Glonass or Compass satellites or transmitters from any other satellite navigation system or navigation system in order to determine the position of the receiver.

While the invention has been shown and describe with reference to certain embodiments thereof, it will be understood by those skilled in the art that various changes in form and detail may be made therein without departing from the spirit and scope of the invention as defined by the appended claims.

## Claims

1. A navigation receiver comprising:
a receive chain arranged to down convert signals received in a tuneable receive frequency band using a tuneable local oscillator, wherein the tuneable receive frequency band is determined by tuning the tuneable local oscillator;
a sampler arranged to sample the down converted signals and to sample a plurality of signals in each first and each second time slot of time slot sequences; and
a processor arranged to determine at least a position associated with the receiver based on at least the sampled signals in each first and each second time slot,
wherein the tuneable local oscillator is arranged to be tuned to a sequence of frequencies such that the tuneable receive frequency band corresponds to a first frequency band in first time slots and the tuneable receive frequency band corresponds to at least a part of a second frequency band in second time slots, and
wherein the navigation receiver is capable of determining a position based on signals received from one or more navigation transmitters operating according to a first navigation system using the first frequency band and from one or more navigation transmitters operating according to a second navigation system using the second frequency band, different from the first frequency band.

2. The navigation receiver according to claim 1, wherein the sampler uses a single sampling clock to sample the signals in each first and each second time slot.

3. The navigation receiver according to claim 1, wherein the first navigation system uses code division multiple access, and the tuneable receive frequency band has a fixed bandwidth that is the same as signals of the first satellite navigation system.

4. The navigation receiver according to claim 1, wherein the second navigation system uses frequency division multiplexing and the tuneable receive frequency band used in the second time slot is narrower in bandwidth than the second frequency band.

5. The navigation receiver according to claim 1, wherein the second time slots comprise a first portion in which the tuneable receive frequency band corresponds to a first part of the second frequency band, and a second portion in which the tuneable receive frequency band corresponds to a second part of the second frequency band.

6. A satellite navigation method comprising the steps of:
receiving signals from satellites operating according to a first satellite navigation system;
based on information received by a receiver capable of receiving signals from one or more satellites operating according to the first satellite navigation system, determining a set of satellites of the first satellite navigation system from which acceptable signals are not received and from which signals would be expected to be received in an unobstructed environment;
estimating a zone of directions of arrival from which satellite reception is not expected based on directions of arrival associated with the set of satellites;
determining a second set of satellites operating according to a frequency division multiplexed satellite navigation system from which signals are expected, based on the estimated zone of directions of arrival from which satellite reception is not expected and based on information received by a receiver capable of receiving signals from one or more satellites operating according to a frequency division multiplexed second satellite navigation system which uses a second frequency band; and
selecting a sub-band for reception of signals, wherein the selected sub-band is of the second frequency band for reception of signals from a satellite in the determined second set of satellites from which signals are expected.

7. The satellite navigation method according to claim 6, wherein the information received by the receiver relating to the first and second satellite navigation systems is at least one of almanac and ephemeris information.

8. The satellite navigation method according to claim 6, further comprising, after selecting the sub-band of the second frequency band:
determining an estimate of a first range between a first satellite and the receiver;
operating according to the first satellite navigation system using the first satellite navigation system, wherein the first range corresponds to a first time;
determining an estimate of a second range between a second satellite and the receiver,
operating according to the second satellite navigation system using the second satellite navigation system, wherein the second range corresponds to a second time, which different from the first time;
determining an estimate of a third range between the second satellite and the receiver on the basis of a determined motion of the second satellite and the estimate of the second range, wherein the third range corresponds to the first time; and
calculating a position of the receiver based on at least the first range, the third range, a position of the first satellite, a position of the second satellite, and signals received from one or more satellites operating according to the first satellite navigation system and one or more satellites operating according to the second satellite navigation system.

9. The satellite navigation method according to claim 8, wherein at least one of the position of the second satellite and the determined motion of the second satellite are determined based on a mapping between a GPS time reference and a Glonass time reference.

10. The satellite navigation method according to claim 9, wherein the mapping between the Glonass position reference and the GPS position reference comprises:
correcting a preset estimate of a time difference between the GPS and the Glonass time reference based on a time difference measured at the receiver between a time corresponding to a start of a GPS sub frame and a time corresponding to a start of a Glonass string.

11. The satellite navigation method according to claim 8, further comprising:
determining an estimate of a fourth range between a third satellite and the receiver;
operating according to the second satellite navigation system using the second satellite navigation system, wherein the fourth range corresponds to a third time, different from the first time and the second time;
determining an estimate of a fifth range between the third satellite and the receiver based on the determined motion of the second satellite and the fourth range, wherein the fifth range corresponds to the first time; and
calculating the position of the receiver based on at least the first, third and fifth range.

12. The satellite navigation method according to claim 6, further comprising, after selecting the sub-band of the second frequency band:
determining a number of navigation transmitters operating according to the first navigation system from which acceptable signals are received; and
selecting, on the basis of the determined number, between:
a single system mode of operating, in which a position of the receiver, capable of determining the position based on signals received from one or more navigation transmitters operating according to the first navigation system and one or more navigation transmitters operating according to the second navigation system, is calculated on the basis of signals received by the receiver from the one or more navigation transmitters operating according to the first navigation system; and
a multi-system mode of operation in which the position of the receiver is calculated based on both signals received by the receiver from one or more navigation transmitters operating according to the first navigation system and signals received from one or more navigation transmitters operating according to the second navigation system.

13. The satellite navigation method according to claim 12, wherein the selection of the multi-system mode is based on the determined number being less than 3 and greater than zero.

14. The satellite navigation method according to claim 12, wherein the first navigation system is a satellite navigation system, and further comprising selecting a terrestrial mode of operation, in which the position of the receiver is calculated based on a terrestrial navigation system, when the determined number is zero.

15. The navigation receiver according to claim 1, wherein:
the navigation receiver is arranged to select a sub-band for the reception of signals, the satellite navigation receiver is capable of receiving signals from one or more satellites operating according to the first satellite navigation system using the first frequency band and from one or more satellites operating according to a frequency division multiplexed satellite navigation system using the second frequency band;
the navigation receiver is arranged to receive signals from satellites operating according to the first satellite navigation system, and based on information received by the navigation receiver relating to the first satellite navigation system, to determine a set of satellites of the first satellite navigation system from which acceptable signals are not received and from which signals would be expected to be received in an unobstructed environment;
the navigation receiver is arranged to estimate a zone of directions of arrival from which satellite reception is not expected based on the directions of arrival associated with the set of satellites;
the navigation receiver is arranged to determine a second set of satellites operating according to the frequency division multiplexed satellite navigation system from which signals are expected, based on the estimated zone of directions of arrival from which satellite reception is not expected and based on information received by the navigation receiver relating to the frequency division multiplexed satellite navigation system; and
the navigation receiver is arranged to select a sub-band for reception of signals, the selected sub-band is of the second frequency band for the reception of signals from a satellite in the second set of satellites.
